Europäisches Patentamt

European Patent Office

Office européen des brevets

(19)

(11) Publication number: **0 027 374
B1**

# EUROPEAN PATENT SPECIFICATION

(45) Date of publication of patent specification: **03.10.84**

(51) Int. Cl.³: **B 62 B 7/08**

(21) Application number: **80303590.6**

(22) Date of filing: **10.10.80**

(54) **Baby carriage.**

(30) Priority: **13.10.79 JP 132136/79
09.11.79 JPU 156262/79
06.02.80 JPU 14370/80**

(43) Date of publication of application:
**22.04.81 Bulletin 81/16**

(45) Publication of the grant of the patent:
**03.10.84 Bulletin 84/40**

(84) Designated Contracting States:
**AT BE CH LI LU NL SE**

(56) References cited:
**FR-A-2 251 295
FR-A-2 318 774
FR-A-2 358 306
FR-A-2 394 434
FR-A-2 394 435
US-A-4 030 769**

(73) Proprietor: **KASSAI KABUSHIKI KAISHA
16-1, Higashishimizu-machi Minami-ku
Osaka-shi Osaka-fu (JP)**

(72) Inventor: **Kassai, Kenzou
16-1, Higashishimizu-machi Minami-ku
Osaka-shi Osaka-fu (JP)**

(74) Representative: **Wright, Peter David John et al
R.G.C. Jenkins & Co. 12-15, Fetter Lane
London EC4A 1PL (GB)**

Courier Press, Leamington Spa, England.

## Description

The present invention relates to foldable baby carriages.

Heretofore, a variety of basic constructions for baby carriages have been proposed and put into practical use.

One conventional construction is generally known as a push chair. A foldable version of such a baby carriage is described in French Specification No. 2 251 295.

French Specification No. 2 251 295 describes a baby carriage having foldable side frames with wheels and foldable cross-members extending between the side frames. Each side frame comprises a front leg, a rear leg, means connecting the front and rear legs, a push rod support having a lower portion pivotably connected to the rear leg, and a generally upwardly extending push rod pivotably connected to an upper portion of the push rod support. Folding of the side frames causes the push rod supports to fold downwardly about the pivots between the push rod supports and the rear legs, and the height of the carriage to be reduced. The cross-members are integral with or rigidly secured to the side frames at their ends and are centrally hinged so that the side frames, when themselves folded, can subsequently be folded towards one another.

This known foldable baby carriage still has some points which remain to be improved. More particularly, the carriage is cumbersome to fold and, when folded, is still bulky. Its four wheels, front and rear, are not on a level with each other when the carriage is folded, so that it is impossible for the folded baby carriage to stand by itself when folded.

According to this invention, there is provided a foldable baby carriage comprising:

a pair of front legs each having a wheel;

a pair of rear legs each having a wheel;

connecting members for maintaining said front legs in spaced relation and said rear legs in spaced relation;

a pair of push rod supports each of which has a lower portion pivotably connected to a respective one of said rear legs and is pivotable rearwardly of the associated leg;

a pair of generally upwardly extending push rods pivotably connected to upper portions of said push rod supports and operable to fold said upper portions downwardly about the pivots between said push rod supports and said rear legs, and

characterised by:

linkage means responsive to said folding of said upper portions downwardly about said pivots to bring said front legs towards one another, said rear legs towards one another and said connecting members towards one another and to fold said front legs and said push rods towards said rear legs.

In a preferred embodiment of the invention, the linkage means comprise a pair of arms which have front portions pivotally connected to the front legs and the rear legs and which have rear portions pivotally connected to the push rods at points spaced a predetermined distance from the lower ends of the push rods. The connecting members comprise foldable connecting rods between the front legs and between the rear legs. And, the linkage means operates during folding as follows:

When the push rod supports are turned rearwardly by the push rods and the arms are turned to bring them substantially into alignment with the rear legs, the linkage acts to draw the front legs toward the rear legs and folds or bends the connecting rods for the front and rear legs.

The linkage means may comprise connecting rod turning members each axially slidably fitted on an associated front leg in the central portion of the latter, bar links each connected between an associated connecting rod turning member and the front portion of an associated arm, and pivotally supported bars each extending inwardly of an associated front leg. Further, the linkage means may include fold-inducing connecting rods each connected between an associated push rod support and an associated front leg.

The baby carriage may also include a hammock having a reclinable back rest. Preferably, the hammock is provided with a head guard associated with the back rest and arranged to be movable to and from a functional position according to the position of the back rest.

Additionally, the baby carriage may have a basket attached thereto which is adapted to be folded in association with the folding of the baby carriage.

The present baby carriage is easy to fold and unfold and the folding and unfolding operation can be carried out by one hand.

The baby carriage, in its preferred embodiment, when folded, has a substantially reduced height, width and longitudinal dimension, and is only small in bulk and weight. Also, the four wheels, front and rear, are on a level with each other in the folded condition of the carriage, thus allowing the baby carriage to stand on itself in its folded state. And, the user can pull the carriage along on its wheels in its folded state so that it is easy to transport.

The invention will be described further, by way of example with reference to the accompanying drawings, in which:

Fig. 1 is a perspective view of a baby carriage embodying the present invention in its opened state;

Fig. 2 is a right-hand side view of the baby carriage of Fig. 1;

Fig. 3 is a right-hand side view of the baby carriage of Fig. 1 in its folded state;

Fig. 4 is a perspective view, as seen from the rear, of connected portions of an arm, a front leg, and a front leg connecting rod shown in Figs. 1 and 2;

Fig. 5 and 6 are diagrammatic views illustrating the movement of the items shown in Fig. 4;

Fig. 7 is a perspective view, as seen from the rear, of connected portions of a rear leg connecting rod and a central connecting rod shown in Figs. 1 and 2;

Fig. 8 and 9 are perspective diagrammatic views illustrating the movement of the items shown in Fig. 7;

Fig. 10 is a diagrammatic view, as seen from one side, showing the relation between a fold-inducing connecting rod, the central connecting rod and tie rods shown in Fig. 9;

Fig. 11 is a partly exploded perspective view illustrating one example of operating means, including an operating lever, and a push rod shown in Figs. 1 and 2;

Fig. 12 is a fragmentary perspective view of the operating lever of Fig. 11;

Fig. 13 is a section taken along the line III—III of Fig. 11;

Fig. 14 is a longitudinal section of an arrangement associated with a sleeve shown in Fig. 11;

Fig. 15 is a perspective view of another example of operating means, including an operating bar, and the push rod of Figs. 1 and 2;

Fig. 16 is a section taken along the line VI—VI of Fig. 15;

Fig. 17 is a section taken along the line VII—VII of Fig. 15;

Fig. 18 is a section taken along the line VIII—VIII of Fig. 15;

Fig. 19 is a section taken along the line IX—IX of Fig. 15;

Fig. 20 is a section taken along the X—X of Fig. 15;

Fig. 21 is a perspective view of the parts extending from the operating bar of Fig. 15 to a sleeve on the push rod;

Fig. 22 is a perspective view of a portion of the rear leg connecting rod pivotally connected to a rear leg;

Fig. 23 is a front view of the items shown in Fig. 22;

Fig. 24 is a perspective view of a portion of the central connecting rod pivotally connected to the folding operative connecting rod;

Fig. 25 is a fragmentary view of the items shown in Fig. 24;

Fig. 26 is a perspective view of a first connecting rod and a second connecting rod of a reclining mechanism for a hammock;

Fig. 27 is a perspective view of a locking member used in combination with the connecting rods shown in Fig. 26;

Fig. 28 is a perspective view of a cover to receive the connected portions of the first and second connecting rods of Fig. 26;

Fig. 29 is a section through the connected portions of the first and second connecting rods of Fig. 26;

Fig. 30 is a side view showing a back rest retaining rod for a back rest of the hammock, said rod being in a raised state;

Fig. 31 is a side view showing the back rest retaining rod in a lowered state;

Fig. 32 is a detail of a portion of Fig. 30;

Fig. 33 is a detail of a portion of Fig. 31;

Fig. 34 is a view similar to Fig. 32, illustrating a portion of the hammock with a head guard attached thereto;

Fig. 35 is a view, similar to Fig. 33, of the items shown in Fig. 34;

Fig. 36 is a further view of some of the parts shown in Fig. 35;

Fig. 37 is a diagrammatic perspective view of a mounting arrangement for a basket shown in Fig. 1;

Fig. 38 is a right-hand side view of a modification of the baby carriage shown in Fig. 1 in an opened state;

Fig. 39 is a right-hand side view of the baby carriage of Fig. 38 in a folded state;

Fig. 40 is a perspective view of the middle region of the baby carriage of Fig. 38;

Fig. 41 is a perspective view of parts mounted on the fold-inducing connecting rods permitting extension of the seat of the baby carriage of Fig. 38;

Fig. 42 is a perspective view of the front portion of an arm of the baby carriage of Fig. 38 adapted to carry a torso guard;

Fig. 43 is a perspective view of an insert for a recess shown in Fig. 42;

Figs. 44 and 45 are plan views, partly in section, illustrating the operation of an arbor included in the torso guard; and

Fig. 46 is a sectional view showing the manner in which the insert is fitted in the recess when the torso guard is removed.

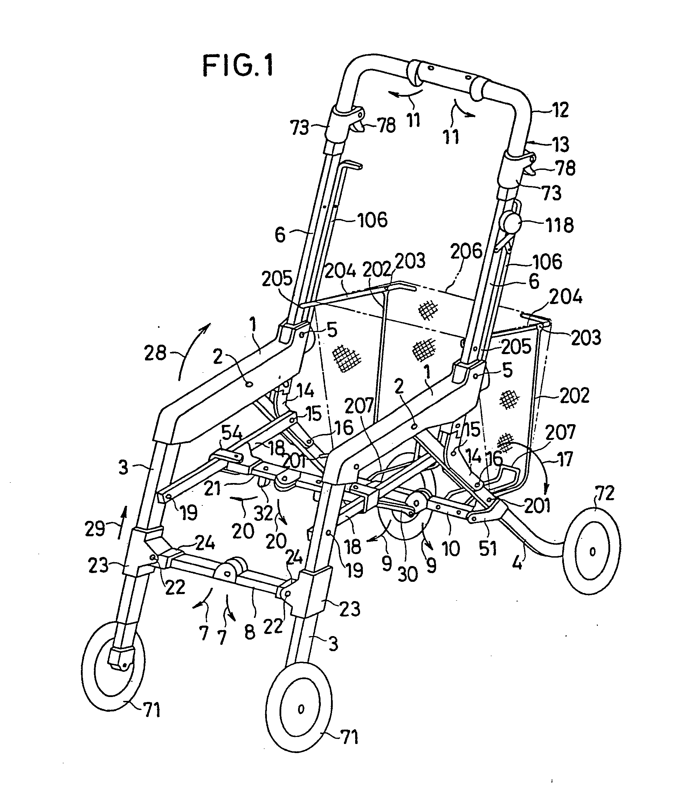

An embodiment of the invention will now be described in detail with reference to the accompanying drawings. The embodiment will first be described generally with reference to Figs. 1 through 3 for a better understanding, rather than going into detail at the outset.

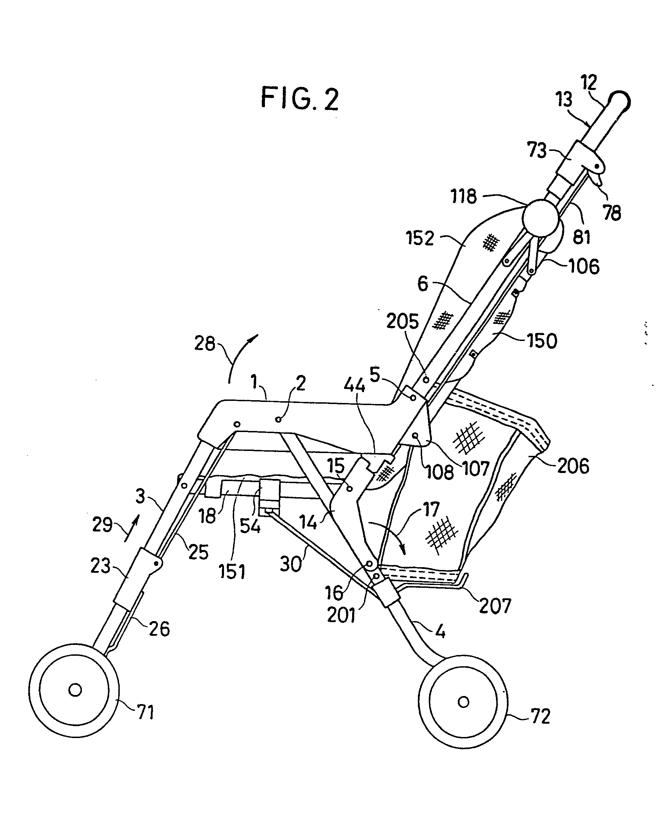

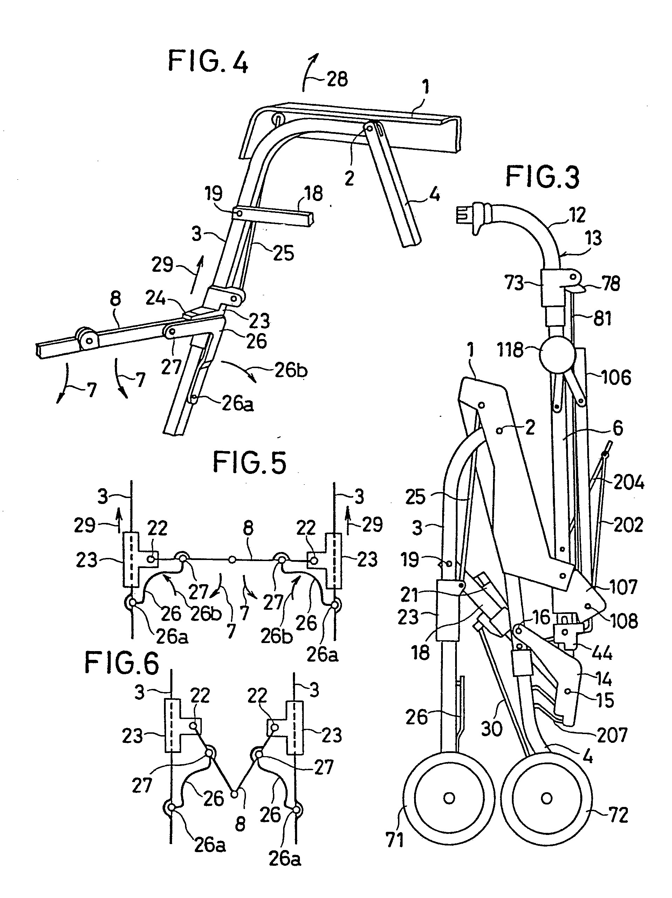

Fig. 1 is a perspective view of a baby carriage embodying the present invention in its opened state; Fig. 2 is a right-hand side view of the same; and Fig. 3 is a right-hand side view of said baby carriage in its folded state. Basically, the baby carriage comprises a pair of arms 1, a pair of front legs 3 and a pair of rear legs 4 which are pivotally supported on support leg pivot pins 2 in relatively forward or intermediate regions of said arms, a pair of push rods 6 pivotally supported on push rod pivot pins 5 disposed on the rear ends of the arms 1 at a predetermined distance from the lower end, a front leg connecting rod 8 which is foldable only downwardly (as indicated by arrows 7) for connecting said pair of front legs 3, a rear leg connecting rod 10 which is foldable only downwardly (as indicated by arrows 9) for connecting said pair of rear legs 4, and a handle 12 which is foldable only forwardly (as indicated by arrows 11) for connecting said pair of push rods 6. The push rods 6 and handle 12 constitute a push frame 13.

According to the invention, in such basic construction, the lower ends of the pusher rods 6 and the rear legs 4 are foldably connected together by push rod supports, in the form of angle bars 14, and pivot pins 15 and 16. The angle bars 14 are rotatable on the pins 16 in the direction of the arrow 17 and depending upon whether the angle bars 14 are turned to extend partially along the upper halves of the rear legs 4 (Figs. 1 and 2) or partially along the lower halves of the rear legs 4 (Fig. 3), the lower ends of the push rods 6 will be positioned either higher or lower relative to the rear legs 4. When the lower ends of the push rods 6 are in the higher position relative to the rear legs 4, the arms 1, the lower portions of the push rods 6 and the upper portions of the rear legs 4 define a triangular configuration establishing the opened condition of the baby carriage. The shape and construction of the related members are so selected that when the lower ends of the push rods 6 are in the lower position relative to the rear legs 4, the arms 1, push rods 6 and rear legs 4 are substantially parallel to each other, thereby establishing the folded condition of the baby carriage.

A fold-inducing connecting rod 18 is installed between each push rod support angle bar 14 and the associated front leg 3 and is pivotally connected thereto at its opposite ends by pivot pins 15 and 19. Connected between the pair of fold-inducing connecting rods 18 is a central connecting rod 21 which is foldable only forwardly (as indicated by arrows 20).

The basic construction of the foldable baby carriage has thus been completed.

The various parts will now be described in detail.

Fig. 4 is a perspective view of the connected portions of one arm 1, front leg 3 and front leg connecting rod 8, as seen from rear. Figs. 5 and 6 are diagrammatic views illustrating the movements of the components shown in Fig. 4. Referring to Figs. 1 through 6, the front leg connecting rod 8 is pivotally connected at its ends to connecting rod turning members 23 by pivot pins 22. Each connecting rod turning member 23 is provided with a socket portion 24 of inverted U-shaped cross-section which fits over an end portion of the front leg connecting rod 8. The connecting rod turning member 23 is axially slidably fitted on the associated front leg 3 in the middle region thereof. A bar link 25 is connected between the connecting rod turning member 23 and the front end of the arm 1. An L-shaped bar 26 extends inwardly from the front leg 3 and has one end pivotally connected to the leg by a pivot pin 26a. The front leg connecting rod 8 is pivotally supported on pivot pins 27 each carried at the other end of the associated bar 26 and positioned at a predetermined distance from the associated end of the front leg connecting rod 8.

With this arrangement, as shown in Figs. 4 to 6, if the arm 1 is turned around the axis of the pivot pin 2 in the direction of arrow 28, the connecting rod turning member 23 is made to slide on the front leg 3 in the direction of arrow 29. In response, the bar 26 is turned in the direction of arrow 26b, while the front leg connecting rod 8 is turned around the axes of the pivot pins 27 in the direction of arrows 7 and is thereby downwardly folded (Fig. 6).

The reverse movement of the front leg connecting rod 8 of Fig. 6 from its folded position is effected by turning of the arm 1 in the opposite direction to cause the bar link 25 to depress the connecting rod turning member 23. The force exerted by this movement acts to turn the front leg connecting rod 8 from the Fig. 6 condition to straighten the same while turning the bar 26 downwardly, thereby establishing the Fig. 5 condition.

When the front leg connecting rod 8 is in the straightened condition as shown in Fig. 5, that is when the baby carriage is in its opened condition, the application of a downward force on the arm 1 (which force is produced, for example, by the weight of a baby placed on a hammock attached to the arms 1) causes the bar link 25 to force the connecting rod turning member 23 downwardly (in the direction opposite to the direction of arrow 29), thereby forcing downwardly the end portion of the front leg connecting rod 8 received in the socket portion of the connecting rod turning member 23 and inhibiting the front leg connecting rod 8 from turning in the direction of arrows 7. That is, the greater the load applied, the more firmly the baby carriage is maintained in its opened condition.

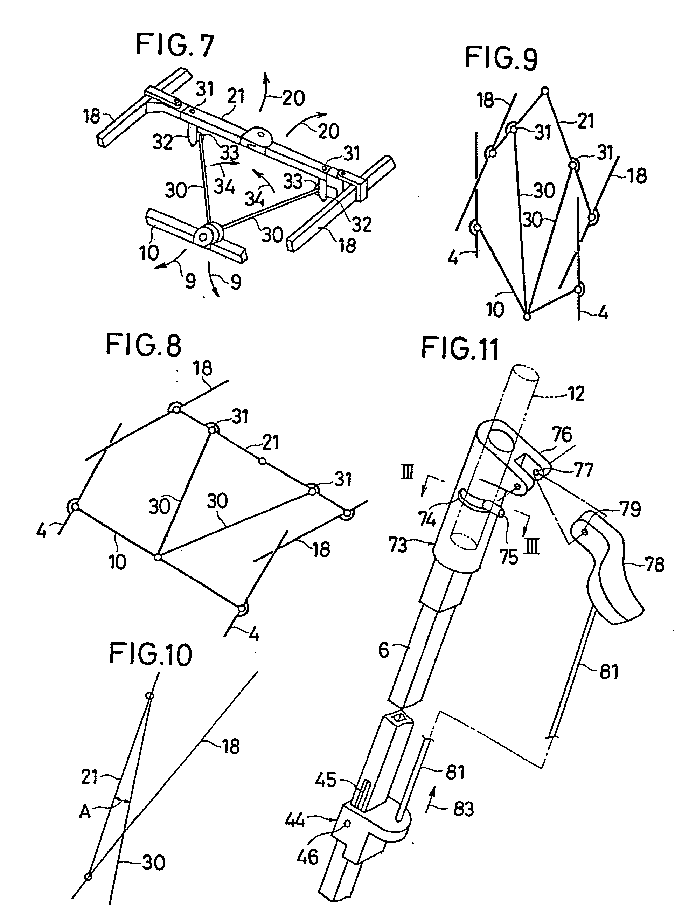

Fig. 7 is a perspective view of the connected portions of the rear leg connecting rod 10 and central connecting rod 21, as seen from the rear. Figs. 8 and 9 are perspective diagrammatic views illustrating the movement of the portion shown in Fig. 7; and Fig. 10 is a diagrammatic view, as seen from one side, showing the relation between one fold-inducing connecting rod 18, the central connecting rod 21 and tie rods 30 shown in Fig. 9.

Referring to Figs. 1 through 3 and 7 through 10, the central connecting rod 21 is disposed at a level different from that of the rear leg connecting rod 10. The manner in which the central connecting rod 21 is folded in the direction of arrows 20 is, preferably, not such that it is folded in a plane containing the pair of fold-inducing connecting rods 18 but such that it folds in a direction some what upward relative to the plane containing the fold-inducing connecting rods 18. This is best seen from Figs. 3, 9 and 10. In order that folding of the central connecting rod 21 in the direction of arrows 20 may be operatively associated with the folding of the rear leg connecting rod 10 in the direction of arrows 9, a pair of tie rods 30 are provided. The tie rods 30 have their ones ends connected to the folding section of the rear leg connecting rod 10 and their other ends connected to the central connecting rod 21 on opposite sides of the folding section of the latter and at predetermined distances from said folding section. The central connecting rod 21 is provided with tongues 33 each extending laterally of a rotatable sleeve 32. Thus, the tie rods 30 are connected at their one ends to the tongues 33.

The arrangement described above with reference to Figs. 7 to 10 is such that the ends of the rear leg connecting rod 10 are urged toward the ends of the central connecting rod 21 when the rear leg connecting rod 10 folds in the direction of arrows 9 (downwardly) and the folding operative connecting rods 18 move toward each other, so that the tie rods 30, each turning in the direction of arrow 34, cause the central connecting rod 21 to fold in the direction of arrows 20 (forwardly).

What should be noted here is the relative movements of the rear leg connecting rod 10, central connecting rod 21 and tie rods 30. When the rear leg connecting rod 10 and the central connecting rod 21 move toward each other, it will be understood that the rear leg connecting rod 10 and the central connecting rod 21 fold away from one another, namely, in the directions of arrows 9 and 20, respectively, simply as a result of the rigidity of the tie rods 30. However, another movement also takes place. In response to folding of the central connecting rod 21, in the direction of arrows 20, the pair of shafts 31, sleeves 32 and tongues 33, respectively, move toward each other. This results in the turning of the tie rods 30 each in the direction of arrows 34. Such turning of the tie rods 30 increases the length of the space defined between the tie rods 30. If the tie rods 30 were arranged not in a V-form but parallel to each other, the connecting rods 10 and 21 could be folded only to an extent corresponding to the movement of the rear leg connecting rod 10 and central connecting rod 21 toward each other. In contrast, the arrangement of the tie rods 30 in V-form as shown in Fig. 7 and other figures allows the folding of the connecting rods 10 and 21 to an extent which corresponds to the movement of the rear leg connecting rod 10 and central connecting rod 21 toward each other plus an amount determined by rotation of the tie rods 30 each in the direction of arrows 34. Thus, this arrangement provides an increased degree of folding for the rear leg connecting rod 10 and central connecting rod 21, which means that the width of the foldable baby carriage in folded condition can be decreased. Further, it should be noted that the mechanism for performing the operation described above is very simple.

The reverse operation is likewise carried out based on the inter-relationship which is established by the tie rods 30.

Further, the described arrangement, wherein the folding direction of the central connecting rod 21 is selected to face somewhat upward from the plane containing the fold-inducing connecting rods 18, assures that during the folding movement of the rear leg connecting rod 10 and central connecting rod 21 there is a time, at least for an instant, when the plane containing the central connecting rod 21 in its folded state coincides with the plane containing the pair of tie rods 30 or crosses this plane at a very small angle A (Fig. 10). Consequently, the plane in which the tie rods 30 act substantially coincides with the plane in which the central connecting rod 21 is folded, providing efficient transmission of the forces exerted by the tie rods 30 on the central connecting rod 21.

In this embodiment, the moment when substantial coincidence occurs is when the central connecting rod 21 is close to its maximum folded condition. That is, said coincidence takes place when the folding of the baby carriage is almost completed. This is advantageous because in the folding and unfolding operation to be described later in the initial stages of bringing the baby carriage from its folded to its opened condition and in the final stages of bringing the baby carriage from its opened to its folded condition, the operator may find difficulty in applying a strong unfolding or folding action.

More particularly, this foldable baby carriage can be folded by urging the push rods 6 downwardly toward the ground in such a manner as to turn the push rod support angle bars 14 in the direction of arrows 17 (Figs. 1 and 2), but when it is to be opened, the push rods are raised to utilize the weight of the baby carriage for effecting the unfolding operation. In this case, because the weight of the baby carriage is limited, especially since the baby carriage is preferably constructed to be lightweight, only a limited force is applied in the unfolding operation. Therefore, in the initial stages of the unfolding condition, as shown in Figs. 3 and 9, if the direction of action of the tie rods almost coincides with the direction of folding of the central connecting rod 21, it will be understood that the central connecting rod 21 can be unfolded with a relatively small amount of force. Further, in the final stages of folding, attainment of the properly disposed condition of the parts shown in Fig. 3 will need a relatively large amount of force. In this case, also, it will be understood that the arrangement represented by this embodiment is very advantageous.

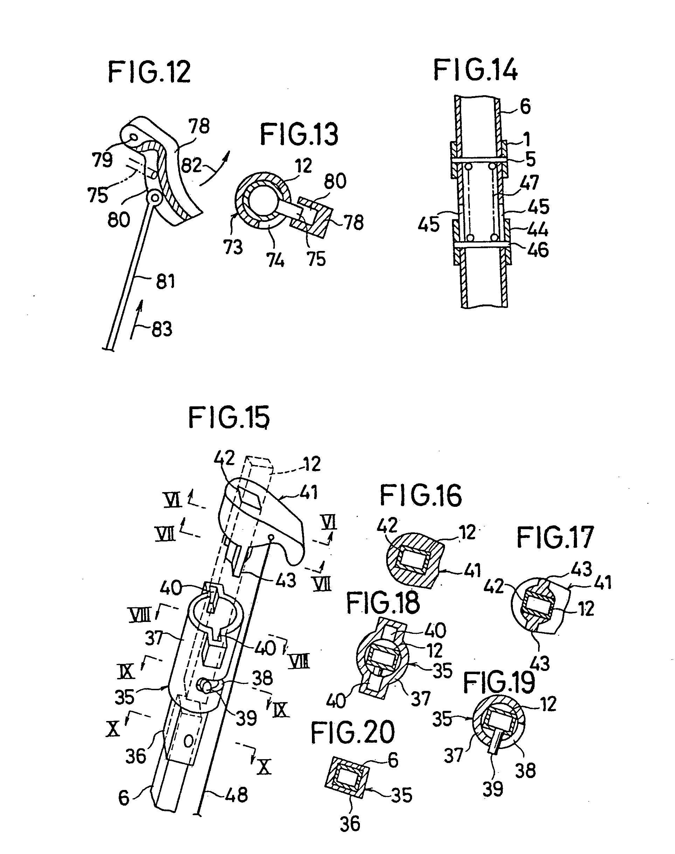

Figs. 11 through 14 are views illustrating one example of operating means associated with the push rods 6. Fig. 11 is a partly exploded perspective view of the arrangement in the region of an operating lever; Fig. 12 is a fragmentary perspective view of the operating lever; Fig. 13 is a sectional view taken along the line III—III of Fig. 11; and Fig. 14 is a longitudinal section of an arrangement in the region of a sleeve.

The upper end of each push rod 6 is formed with a guide 73. The latter receives an end of the handle 12. The handle 12 is formed from a round pipe or bar and is turnable within the guide 73 around the axis of the latter. The lateral surface of the guide 73 is formed with an elongated guide opening 74 extending through about 90 degrees for receiving a guide pin 75 which is fixed to the handle 12. The guide 73 is formed with a bracket 76 having bores 77 formed therein. An operating lever 78 has a bore 79. With the bores 79 and 77 aligned with each other, a shaft (not shown) is inserted into said bores, so that the lever 78 is rotatably supported in the guide 73. The operating lever 78 has a recess 80 therein on its downwardly directed surface. The portion where said recess 80 is formed has the upper end of a rod 81 attached thereto, the lower end of said rod 81 being attached to a sleeve 44.

The sleeve 44 is slidably fitted on the lower portion of the push rod 6. Adjacent the sleeve 44, the push rod 6 is formed with an elongated opening 45 and a pin 46 which extends through said elongated opening 45 is fixed to the sleeve 44. The co-operative action of the elongated opening 45 and pin 46 defines the range of the sliding movement of the sleeve 44. A spring 47 is installed inside the push rod 6 between the pins 5 and 46 and resiliently urges the sleeve 44 downwardly at all times. As a result, the lower end surface of the sleeve 44 is urged into engagement with the end of the push rod support angle bar 14 to secure the opened condition of the baby carriage (Figs. 1 and 2).

The operating lever 78 has the dual function of releasing the sleeve 44 from the push support angle bar 14 and keeping the handle 12 from turning relative to the push rod 6. When the operating lever 78 is turned downwardly, the guide pin 75 is received in the recess 80 (Figs. 12 and 13), thereby inhibiting the handle 12 from turning relative to the guide 73. If the operating lever 78 is turned in the direction of arrow 82, the rod 81 is displaced in the direction of arrow 83, releasing the sleeve 44 from the push rod support angle bar 14, while the guide pin 75 comes out of the recess 80, enabling the handle member 12 to turn. When the operating lever 78 is turned upwardly beyond dead centre it becomes stabilized.

The turning of the operating lever 78 in the direction of arrow 82 triggers the folding operation of the baby carriage to be described later. Downward turning of the operating lever 78 (which is encouraged by the spring 47) is effected when the baby carriage is fixed open.

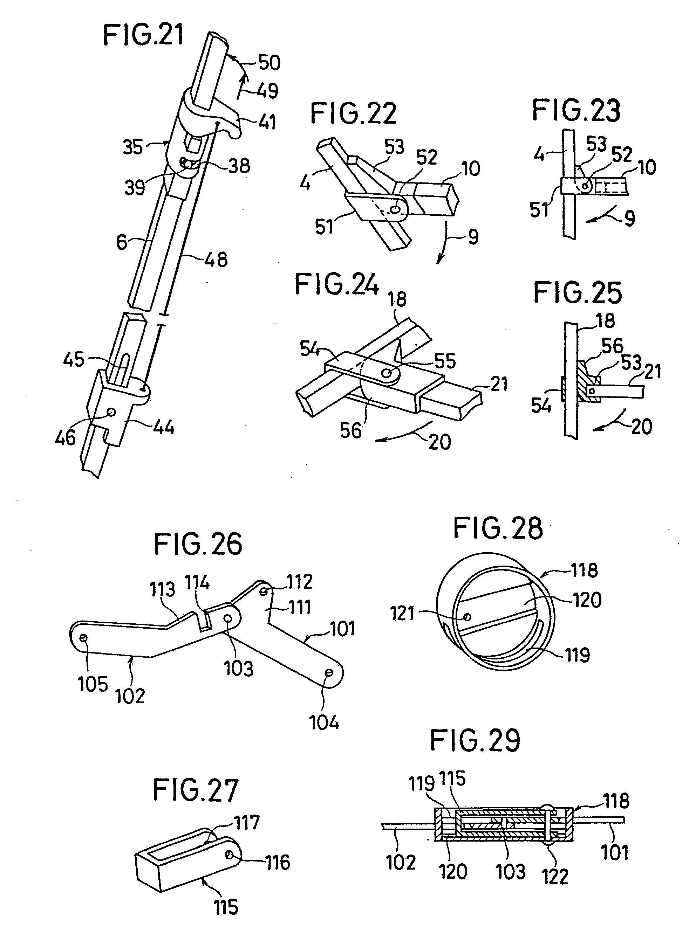

Figs. 15 through 21 are views illustrating another example of operating means associated with the push rods. Fig. 15 is a perspective view of an operating bar and its arrangement; Fig. 16 is a section taken along the line VI—VI of Fig. 15; Fig. 17 is a section taken along the line VII—VII of Fig. 15; Fig. 18 is a section taken along the line VIII—VIII of Fig. 15; Fig. 19 is a section taken along the line IX—IX of Fig. 15; Fig. 20 is a section taken along the line X—X of Fig. 15; and Fig. 21 is a perspective view of the parts extending from the operating bar to a sleeve.

Referring to Figs. 15 through 21, the upper end of each push rod 6 is formed with a guide 35. The push rod 6 is formed from a square pipe or bar and is inserted at its upper end into a square sleeve portion 36 of the guide 35. The upper portion 37 of the guide 35 is cylindrical and receives one end of the handle 12. The portion of the handle received in the cylindrical portion 37 is axially aligned with the push rod 6. The handle 12, like the push rod 6, is formed from a square pipe or bar, but it is loosely received in the cylindrical portion 37, so that it can turn on the axis of the cylindrical portion. The lateral surface of the cylindrical portion 37 is formed with an elongated guide opening 38 extending through about 90° for receiving a guide pin 39 fixed to and extending from the side of the handle 12. Therefore, the handle 12 is rotatable within the range defined by the length of the elongated guide opening 38. The upper surface of the guide 35 is formed with laterally projecting grooves 40.

A square-apertured operating bar 41 is disposed coaxially with the push rod 6 and above the guide 35. The square-apertured operating bar 41 is formed with a square through aperture 42, in which the handle 12 is inserted, thereby allowing the square-apertured operating bar 41 to slide axially along the handle 12 while inhibiting it from turning relative to the latter. The square-apertured operating bar 41 is formed with downwardly extending projections 43 adapted to fit in the grooves 40 when it is slid along the handle 12. This fit, when effected, inhibits the handle 12 from turning relative to the push rod 6. This means that the turning movement in the direction of arrow 11 in Fig. 1 is inhibited.

A wire 48 is installed between the square-apertured operating bar 41 and the sleeve 44 (see Figs. 11 and 14) to establish an interlocking relation therebetween. The interlocking through this wire 48 will now be described. The state shown in Fig. 21 corresponds to that shown in Figs. 1 and 2. If the square-apertured operating bar 41 is pulled up in the direction of arrow 49 as seen in Fig. 21, the sleeve 44 is moved upwardly by the wire 48. In response, the lower surface of the sleeve 44 leaves the end of the push rod support angle bar 14, thus establishing a state which allows the turning of the push rod support angle bar 14 in the direction of arrow 17, which will induce folding of the baby carriage. The resulting relation between the square-apertured operating bar 41 and the guide 35 is such that, as shown in Fig. 15, the projections 43 are disengaged from the grooves 40. While maintaining this state, for example by slightly twisting the square-apertured operating bar 41 in the direction of arrow 50 to place the lower end surface of the projections 43 on the upper end surface of the guide 35, the square-apertured operating bar 41 is then turned around the axis of the push rod 6 in the direction of arrow 50, whereby the handle 12 is turned relative to the guide 35 to cause it to collapse in the direction of arrow 11 in Fig. 1. This operation also induces folding of the baby carriage.

If the square-apertured operating bar 41 is reversely operated to align the projections 43 with the grooves 40, the square-apertured operating bar 41 being urged downwardly through the wire 48 by the sleeve 44, which is loaded by the spring 47, assures that engagement between the projections 43 and the grooves 40 is automatically effected. The spring 47 also causes engagement between the lower end surface of the sleeve 44 and the end of the support angle bar 14.

Fig. 22 is a perspective view showing a connection between the rear leg connecting rod 10 and the rear leg 4; and Fig. 23 is a front view of said connection. The rear leg connecting rod 10 is pivotally connected to the rear leg 4 by a pivot pin 52 mounted in a U-shaped connector 51 fixed to the rear leg 4. Each end of the rear leg connecting rod 10 is formed with a rotation stop 53 including a surface which is normal to the direction in which the rear leg connecting rod 10 extends, thereby rendering the rear leg connecting rod 10 collapsible only in the direction of arrows 9, as already described.

Fig. 24 is a perspective view showing a connection between the central connecting rod 21 and the fold-inducing connecting rod 18; and Fig. 25 is a plan view, partly in section, of said connection. The connection shown in these figures has substantially the same operating principle as the connection shown in Figs. 22 and 23. Thus, the central connecting rod 21 is pivotally connected to the fold-inducing connecting rod 18 by a pivot pin 55 mounted in a connector 54 fixed to said rod 18 and has a rotation stop 56 formed on the end thereof which allows the central connecting rod 21 to turn only in the direction of arrows 20.

The construction of one embodiment of the baby carriage and folding of the individual parts is described above. The overall folding operation will now be described.

Referring to Figs. 1 and 2, which show the opened condition of the baby carriage, the push rod support angle bars 14 in this condition follow the upper halves of the rear legs 4, with the result that the lower portions of the push rods 6 are in their higher position relative to the rear legs 4. At this time, a triangular configuration is presented by each arm 1, the lower portion of the push rod 6 and the upper portion of the rear leg 4, whereby the opened condition of the baby carriage is established.

Folding of the baby carriage proceeding from the Figs. 1 and 2 condition to the Fig. 3 condition is as follows: First, the operating lever 78 is turned in the direction of arrows 82 (Fig. 12) until it is brought to an upwardly inverted position. Since the operating lever has passed its dead centre, it is maintained in this position in spite of being urged downwardly by the spring 47. At this time, the guide pin 75 has come out of the recess 80 to render the handle 12 rotatable. Further, the pressure engagement between the sleeve 44 and the push rod support angle bar 14 has been released. The operation described so far can be performed by successively manipulating the two operating levers 78 with one hand. Next, one side of the central foldable portion of the handle 12 is gripped by one hand and the push frame 13 is tilted slightly forward while applying a twisting force to the handle in the direction of arrows 11, so as to cause the push rod support angle bars 14 to turn a little in the direction of arrows 17. Thereafter, the push frame 13 is downwardly thrusted by the hand which has grasped the handle 12. When this thrusting operation is performed, at least the rear wheels 72 are preferably engaged with the ground.

In some cases, the twisting force acting on the handle 12 in the direction of arrows 11 and the starting torque on the push rod support angle bars 14 in the direction of arrows 17 may be naturally produced by the weight of the baby carriage. More particularly, if the operator grips the handle 12 on one side of its central foldable portion with one hand and tilts the entire baby carriage rearwardly such that the front wheels 71 lift into the air while the rear wheels 72 remain in contact with the ground, the weight of the baby carriage may act to cause the other side of the handle 12 to sag through the intermediary of the central foldable portion. Thus a twisting force acting on the handle 12 in the direction of arrows 11 is produced. Further, the push rod support angle bars 14 and the push rods 6 may then collapse downwardly under the force of gravity. Thus, a force is produced which acts on each push rod support angle bar 14 to turn the latter in the direction of arrow 17. After the folding of the handle 12 and the turning of the push rod support angle bars 14 have been effected to some degree in this manner, the operator brings the baby carriage back to its original position and depresses the push frame 13 with the hand which grasps the handle 12. As a result, the following operation is subsequently effected.

The push rod support angle bars 14 are turned in the direction of arrows 17 until they extend along the lower halves of the rear legs 4. In response, the arms 1 are turned substantially around the axes of the support leg pivot pins 2 in the direction of arrow 28, causing the bar links 25 to slide the connecting rod turning members 23 in the direction of arrow 29. As a result, the front leg connecting rod 8 is folded in the direction of arrows 7. This folding of the front leg connecting rod 8 and the previously mentioned folding of the handle 12 combine to decrease the width of the baby carriage. Concurrently, the rear leg connecting rod 10 is folded in the direction of arrows 9, causing the tie rods 30 to fold the central connecting rod 21 in the direction of arrows 20. Further, in response to the turning of the push rod support angle bars 14 in the direction of arrow 17, the fold-inducing connecting rods 18 draw the front legs 3 toward the rear legs 4.

These folding operations proceed substantially simultaneously, until the push rod support angle bars 14 are positioned to extend along the lower halves of the rear legs 4. At this time, the front and rear legs 3 and 4 are brought together to extend substantially parallel to each other, and the arms 1 receive the rear legs 4 in spaces therein, the arms 1 and rear legs 4 being brought to substantially parallel positions. Further, the front leg connecting rod 8, rear leg connecting rod 10, handle 12 and central connecting rod 21 are fully folded, and the respective pairs of arms 1, front legs 3, rear legs 4, push rods 6, handles 12 and fold-inducing connecting rods 18 move toward each other until they are close to each other, resulting in the baby carriage being also widthwise contracted. In this folded condition, the two front wheels 71 and two rear wheels 72 are all at the same level, thus enabling the baby carriage to stand by itself.

When it is desired to change the folded state shown in Fig. 3 into the unfolded state shown in Fig. 1, this can be effected basically by reversing the procedure described above, whereby the reversed operation takes place. In brief, the operator holds the handle 12 with one hand and raises it to lift the baby carriage into the air so as to cause the push rods 6 to turn the push rod support angle bars 14 counterclockwise as seen in Fig. 3. In response, the push rod support angle bars 14 are caused to extend along the upper halves of the rear legs 4, and the arms 1 are turned counterclockwise, causing the bar links 25 and connecting rod turning elements 23 to straighten the front leg connecting rod 8. Further, the folding operative connecting rods 18 move the front legs 3 away from the rear legs 4. Because of the resulting increase in the widthwise dimension, the rear leg connecting rod 10 and central connecting rod 21 are straightened in association by the action of the tie rods 30. When the condition shown in Figs. 1 and 2 has finally been attained, the operating levers 78 are turned downwardly to receive the guide pins 75 in the recesses 80 therein, thereby inhibiting folding of the handle 12, while the sleeves 44 are brought into pressure engagement with the push rod support angle bars 14, so that the folding of the push rod support angle bars 14 and push frame 13 is inhibited, thereby establishing the firm, opened condition of the baby carriage.

Of Figs. 1 through 3 showing the frame of the entire baby carriage, only Fig. 2 shows the shape of a hammock. The hammock comprises a back rest 150 retained by retaining rods 106, and a seat 151 formed on a plane defined by the fold-inducing connecting rods 18 and central connecting rod 21. In this case, the arms 1 serve as arm rests. In addition, since flank plates 152 are installed vertically on opposite sides of the back rest 150 in Fig. 2, the back rest 150 does not clearly appear in Fig. 2. A reclining mechanism is incorporated in this hammock to permit the angle of inclination of the back rest 150 to be changed. This will now be described.

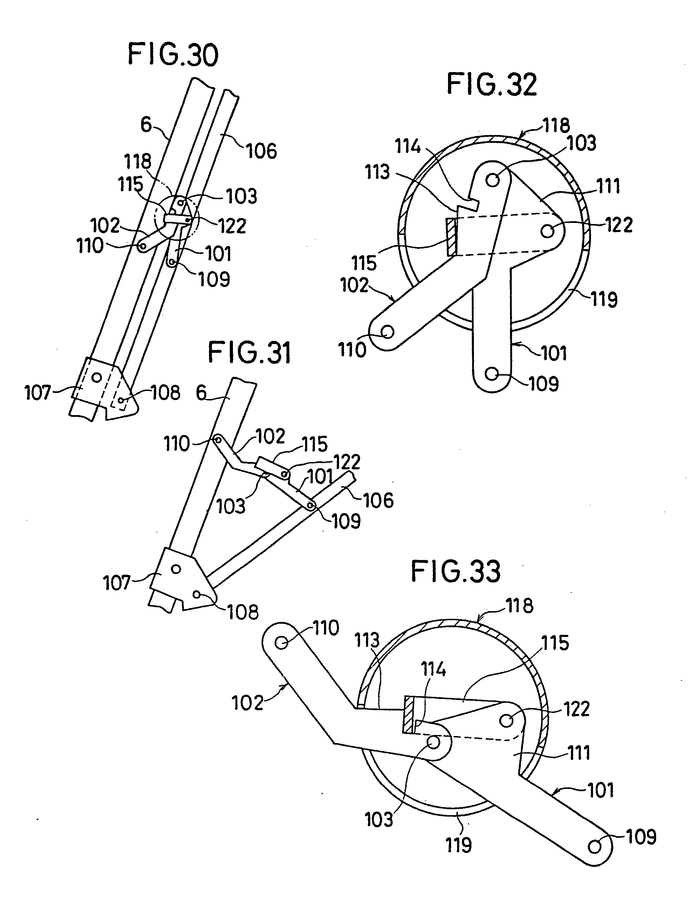

Figs. 26 through 33 serve to illustrate the hammock reclining mechanism. Fig. 26 is a perspective view showing first and second connecting rods; Fig. 27 is a perspective view showing a locking member; Fig. 28 is a perspective view showing a cover; Fig. 29 is a sectional view showing a connecting portion for the first and second connecting rods; Fig. 30 is a side view showing a back rest holding rod for holding the hammock back rest (not shown) in a raised condition; Fig. 31 is a side view showing the back rest holding rod in lowered condition; Fig. 32 is a diagrammatic side view showing the principal portions of Fig. 30; and Fig. 33 is a diagrammatic side view showing the principal portions of Fig. 31.

Referring to Fig. 26, a first connecting rod 101 and a second connecting rod 102 are pivotally connected together by a pivot pin 103 so that they are foldable relative to each other. The respective ends of the first and second connecting rods 101 and 102 are provided with through holes 104 and 105, respectively. The first and second connecting rods 101 and 102, as shown in Figs. 1 through 3, are connected between the push rod 6 and a back rest holding rod 106.

The back rest holding rod 106 is installed between the opposed surfaces of a connector 107 of U-shaped cross-section fixed to the lower end of the push rod 6 and is pivotally supported on a pivot pin 108. Holding the back rest holding rod 106 between the opposed surfaces of the connector 107 advantageously prevents the holding rod 106 from shifting transversely as said rod is turned.

The through holes 104 and 105 shown in Fig. 26 are used for connecting the first and second connecting rods 101 and 102 between the push rod and the back rest holding rod 106. Thus, the first and second rods are pivotally supported by the back rest holding rod 106 and push rod 6 through pivot pins 109 and 110 inserted in the through holes 104 and 105, respectively.

The first connecting rod 101 is formed with a projection 111 having a through hole 112. The second connecting rod 102 is bent and is formed with first and second locking portions 113 and 114. The first locking portion 113 has simply a flat surface extending from the second locking portion 114, but, in fact, it provides a locking function as will be understood from the description given later. The second locking portion 114 has a notch.

Referring to Fig. 27, a locking member 115 is formed in the shape of a U. It is provided with through holes 116 and 117 at its opposite ends.

Referring to Fig. 28, a cover 118 is substantially cup shaped and cylindrical. The lateral wall of the cover 118 is formed with a cutout 119 extending through about 180°. The base wall of the cover 118 is formed with a recess 120. A through hole 121 is formed in the base wall in the recess 120 at a position to one side of the recess.

Referring to Figs. 29 through 33, the assembly of said first and second connecting rods 101, 102, locking member 115 and cover 118 will now be described. The first step is to align the through hole 112 in the first connecting rod 101, the through holes 116 and 117 in the locking member 115 and the through hole 121 in the cover 118. In this condition, the cover 118 shown in Fig. 28 has been turned over from the illustrated position. A pivot pin 122 is then inserted into the through holes 112, 116, 117 and 121. One limb of the locking member 115 now fits in the recess 120 in the cover 118, so that the locking member 115 and cover 118 are rotatable as unit. The first and second connecting rods 101 and 102 also extend out through the cutout 119 in the cover 118.

By comparing Figs. 30 and 32 with Figs. 31 and 33, the operation of the reclining mechanism will now be described. In Figs. 30 and 32, the first and second connecting rods 101 and 102 are in the first folded condition where they are folded to a maximum, with the locking member 115 engaging the locking portion 113. In this condition, since the first and second connecting rods 101 and 102 are fixed by the locking member 115 so as not to open any further, the back rest holding rod 106 is fixed substantially parallel to the push rod 6, i.e., with the back rest 150 of the hammock upright.

When it is desired to bring the back rest 150 of the hammock into a lowered condition, the locking member 115 is turned clockwise to disengage it from the first locking portion 113. This operation may be performed by gripping and turning the cover 118 since if it is turned clockwise the locking member 115 is turned integrally therewith. With the locking member 115 thus disengaged, the back rest holding rod 106 may be inclined to establish the second folded condition in which the first and second connecting rods 101 and 102 are straightened to their fullest extent. Even if the hand is then removed from the cover 118, the locking member 115 will be automatically engaged by the locking portion 114. This is because the cover 118 and locking member 115 are pivotally supported on the offset pivot pin 122 and the force of gravity tends to turn the same counterclockwise at all times. The manner of engagement between the locking member 115 and the second locking portion 114 is shown in Figs. 31 and 33.

In this condition, the back rest 150 of the hammock is in a reclining condition. When it is desired to return the back rest 150 of the hammock into an upright condition, the cover 118 is again gripped and turned clockwise to release the engagement between the locking member 115 and locking portion 114, and the back rest holding rod 106 is raised. In the final stage of this raising operation, as shown in Figs. 31 and 33, the force of gravity on the locking member 115 and cover 118 produce a counterclockwise force on the locking member 115 to automatically engage it with the first locking portion 113. Instead of employing gravity, a spring may be used.

The first cover 118 has been described primarily as an operating knob, but it goes without saying that the cover, in itself, provides a safeguard by covering the connecting portions of the first and second connecting rods 101 and 102.

In a hammock having the above described reclining mechanism incorporated therein, there is a danger, if the back rest 150 is greatly inclined, of the baby in the hammock slipping headforemost out of the hammock should the entire baby carriage be tilted rearwardly to lift the front wheels 71, as when negotiating the baby carriage from a road onto a sidewalk. For this reason, it is desirable to provide a head guard on the upper end of the back rest 150 over the head of the baby.

Such head guard, however, is not required when the back rest 150 is in its raised position: it may even be undesirable then since it may oppress the baby. Thus, the carriage preferably has a head guard and a mechanism which brings the head guard into a position generally perpendicular of the back rest at its upper end, when the back rest 150 is reclined substantially, in response to the reclining action of the back rest. Such a mechanism can be obtained merely by making a simple modification or adding a simple member to the reclining mechanism of the hammock described above. Such a mechanism with a head guard will now be described.

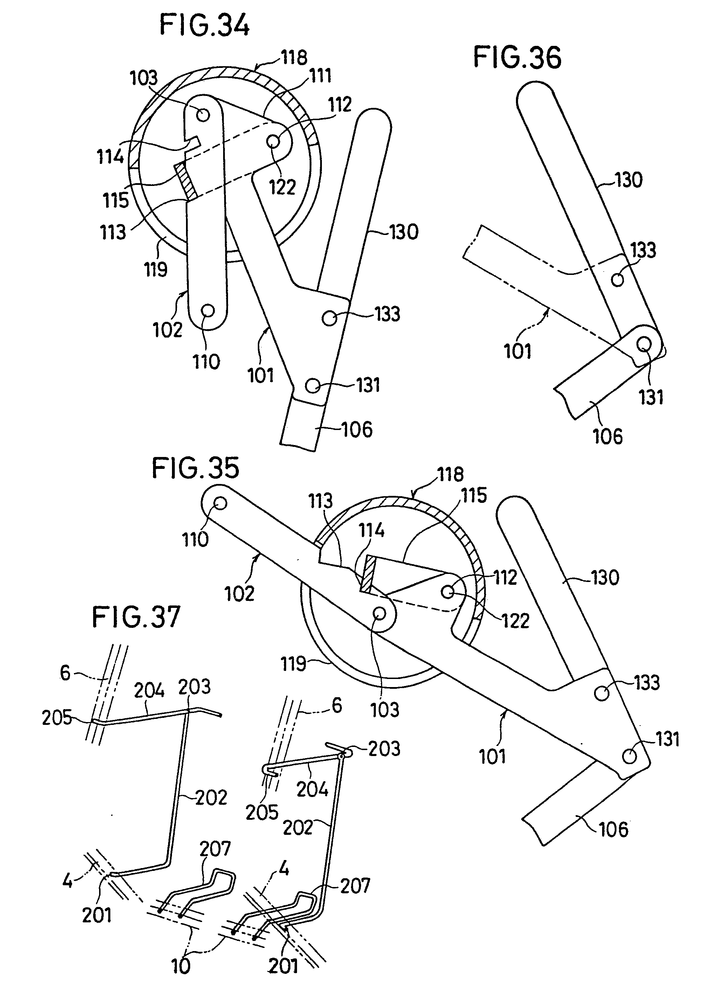

Figs. 34 through 36 are views illustrating a hammock having a head guard added thereto. Fig. 34 is an enlarged diagrammatic side view, showing a back rest retaining rod in its raised position; Fig. 35 is an enlarged diagrammatic side view, showing the back rest retaining rod in its lowered position; and Fig. 36 is an enlarged diagrammatic side view which supplements Fig. 35.

A head guard retaining rod 130 is pivotally connected to the upper portion of the back rest retaining rod 106 by a pivot pin 131. This state is best shown in Fig. 36. The head guard retaining rod 130 is U-shaped, though this is not shown in Figs. 34 through 36 which are side views, and is foldable at the opposite ends and at the middle of the transverse portion of the U, the foldable portion in the middle being foldable in a direction indicated by the arrows 11 in Fig. 1. This arrangement permits the folding of the baby carriage. A first connecting rod 101 is fixedly connected to the head guard retaining rod 130 by a pivot pin 131 and a fixed pin 133. Although the head guard is not shown in Figs. 34 through 36, only the head guard retaining rod 130 alone be shown therein, the head guard may be constructed as an extension of the back rest 150. Its shape is not special and so an illustration thereof is omitted.

With reference to Figs. 34 and 35, the operation of the head guard retaining rod 130 will be described in connection with the tilting movement of the back rest retaining rods 106.

In the state shown in Fig. 34, the head guard retaining rod 130 is substantially aligned with the back rest retaining rod 106 as a result of the position of the first connecting rod 101. Accordingly, the head guard retained by the head guard retaining rod 130 extends in the same plane as that of the back rest and does not cover the head of the baby.

If the back rest retaining rod 106 is 'then lowered, the state shown in Fig. 35 is established. The first connecting rod 101 is now in a tilted state. In the tilted state of the first connecting rod 101, the head guard retaining rod 130 extends in a direction substantially perpendicular of the back rest retaining rod 106. The head guard carried by the head guard retaining rod 130 is now functional as a head guard for protecting a baby in the hammock from slipping out headforemost.

As shown in Figs. 1 through 3, the baby carriage has a basket attached thereto below the back rest for containing baggage. Fig. 37 is a diagrammatic perspective view of the frame of the basket. This frame will now be described with reference to Figs. 1 through 3 and 37.

The frame of the basket is constructed, for example, from bent metal rods of suitable diameter. Thus, a pair of L-shaped lateral rods 202 are pivotally supported at pivot points 201 spaced a predetermined distance from the lower ends of the rear legs. Each L-shaped lateral rod 202 extends rearwardly from the pivot point 201 and then upwardly. The L-shaped lateral rod 202 has an upper side rod 204 pivotally connected thereto at a pivot point 203 on the upper end thereof. The upper side rod 204 extends forwardly and its front end is pivotally supported by the associated push rod 6 at a pivot point 205. The pivot points 201 and 205 are provided by bending each of the L-shaped lateral rod 202 and the upper side rod 204 at one end to form pivot shafts. The rear ends of the upper side rods 204 are bent inwardly and spaced relative to each other. This arrangement allows the folding of the baby carriage.

The basket shown in Fig. 2 is supported by the L-shaped lateral rods 202 and upper side rods 204 which constitute a frame thereof. More particularly, the basket is in the form of a bag 206 having an opening at the top, with strips of thick fabric extending along the edges of the bag for the purpose of retaining its shape, the surfaces of the bag being formed of a net. Therefore, the basket has pliability. This is for the purpose of allowing the folding of the baby carriage and also the basket itself.

In order to support the bottom of the bag 206 and regulate the shape of the bag 206, support members 207 extend rearwardly from the rear leg connecting rod 10. The support members 207 are useful particularly when relatively heavy baggage is received in the bag 206.

The folding operation on the basket will now be described in connection with the folding operation on the baby carriage. When the baby carriage is folded, the push rod support angle bars 14 are turned in the direction of arrow 17 until they extend along the lower halves of the rear legs 4. If attention is given to this operation, it will be understood that the distance between the pivot points 201 and 205 decreases. Accordingly, as can be seen from a comparison between Figs. 2 and 3, the upper side rods 204 are turned counterclockwise around the pivot points 203, thus drawing the L-shaped lateral rods 202 toward the push rods 6. This state, as is clear from Fig. 3, is such that the basket thus folded is substantially within the confines of the space for the folding of the baby carriage. Further during the folding of the baby carriage, the pair of push rods 6 and the pair of rear legs 4 respectively approach each other while reducing the width. This movement is not obstructed by the structure associated with the basket since the pair of upper side rods 204 are separated from each other. Further, the support members 207 are displaced with the rear legs 10 and brought to a position as shown in Fig. 3, being substantially within the confines of the space for the folding of the baby carriage. In addition, since the bag 206 is of pliable material, it will advantageously follow the movement or displacement of the L-shaped lateral rods 202 and upper side rods 204 and will be suitably deformed.

The baby carriage of basic construction described so far may have various fittings, in addition to the basket described above, and an example of such a modification is described below.

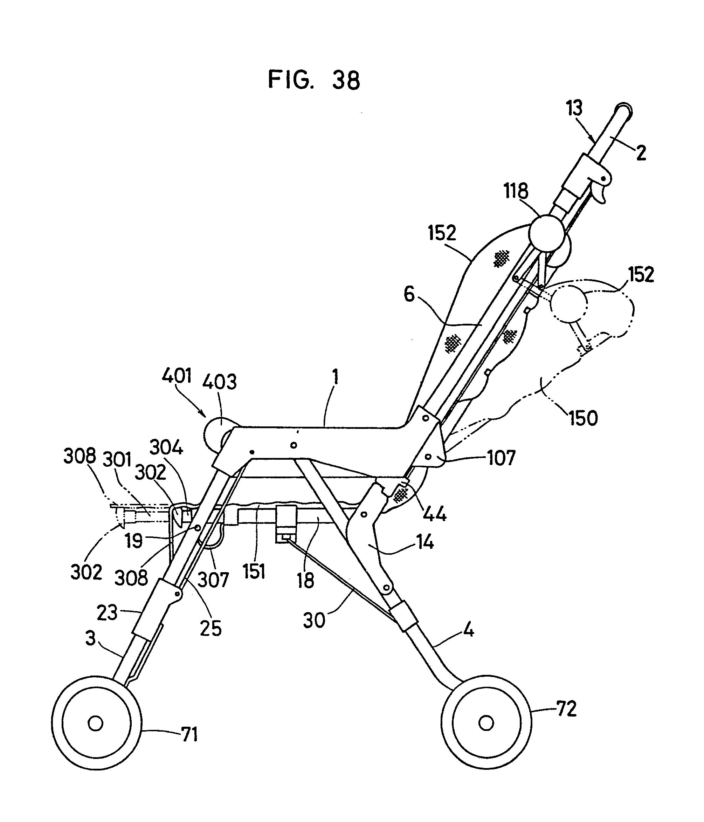

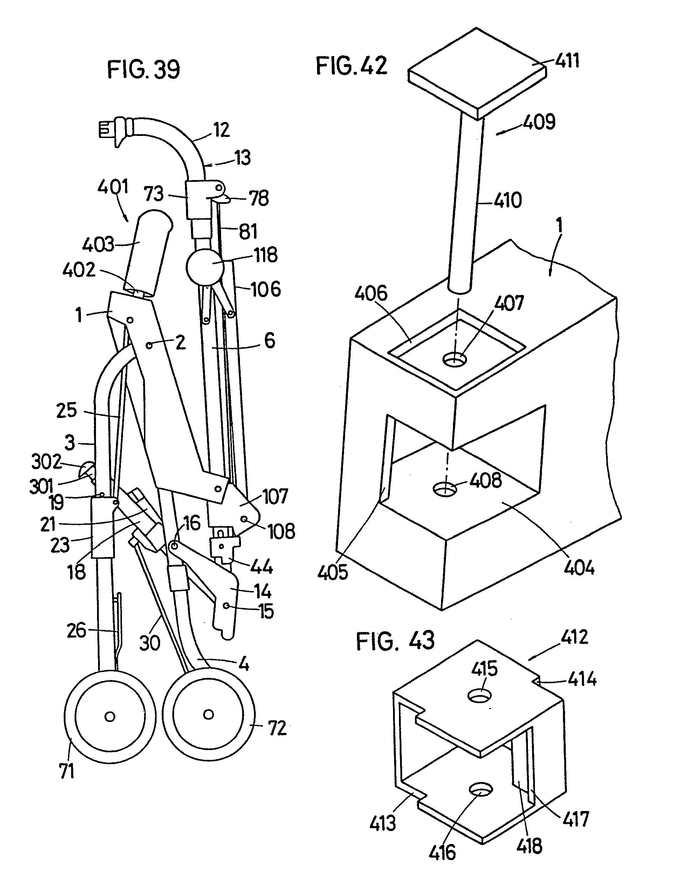

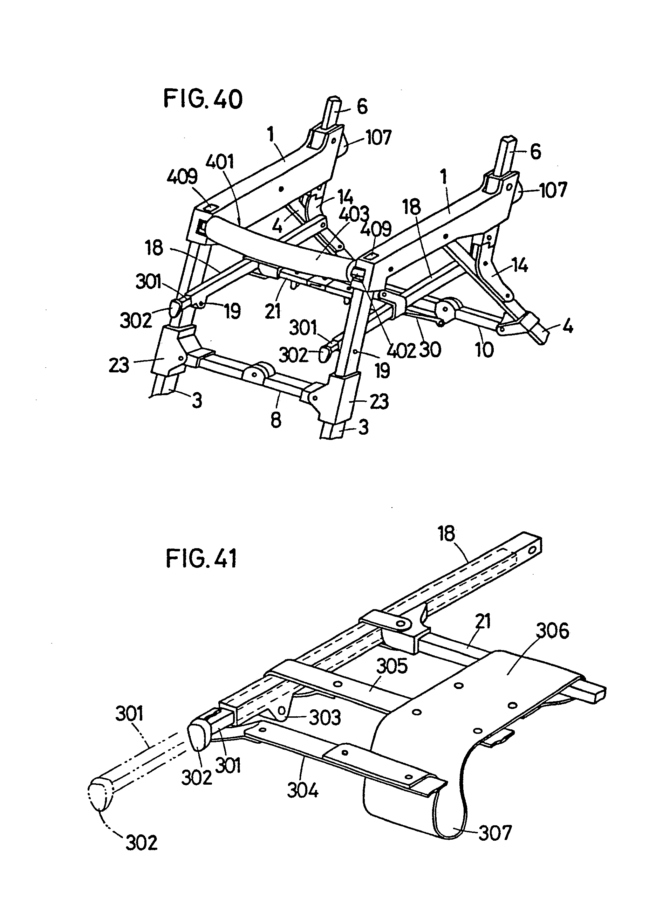

Fig. 38 is a right-hand side view of a carriage which is basically the same as that of Fig. 1 but which has an extendible seat, and a torso guard attached to the basic structure. Fig. 39 is a right-hand side view of the baby carriage in its folded state. Fig. 40 is a perspective view diagrammatically showing the middle region of the baby carriage. As shown in these figures, it is possible to attach seat extending means and a torso guard to the basic construction shown in Figs. 1, etc.

First, the seat extending means will be described. Fig. 41 is a perspective view of fold-inducing connecting rods 18 and the parts permitting extension of the seat of the baby carriage of Fig. 38. Referring to Figs. 38 through 41, fold-inducing connecting rods 18 are hollow. Each fold-inducing connecting rod 18 has a bar slider 301 slidably inserted therein. The front end of the slider 301 is formed with a head 302 to enable the operator to draw out the slider 301 or push it the slider 301 back to its retracted position. In addition, in order to allow the slider 301 to slide within the fold-inducing connecting rod 18, the latter is formed with a bracket 303 and said pivot pin 19 is inserted through said bracket 303.

A reinforcing belt 304 is stretched between the front ends of the two sliders 301. Further, a reinforcing belt 305 is also stretched between the two folding operative connecting rods 18 forwardly of the central connecting rod 21. A web 306 extending in a direction which crosses the belts 304 and 305 is fixed to these and about the central connecting rod 21. When the sliders 301 are not drawn out, there is a sag 307 in the web 306. The length of the web 306 is determined such that, when the sliders 301 are drawn out, the sag 307 is straightened out. The seat 151 described above is formed on these belts 304, 305, 306 and the central connecting rod 21. As best shown in Fig. 38, the seat 151 includes a seat extension 308 hanging from the front end thereof.

The seat extension 308 is for use when the back rest 150 of the hammock is lowered into a reclining form, as shown in phantom lines in Fig. 38. It is more comfortable for the baby to straighten its legs when reclining, and if the sliders 301 are then drawn out by means of the heads 302, the seat, extension 308 is supported on the belt 304 and the front end of web 306 and extends horizontally. This allows the baby to straighten its legs on the seat extension 308. If the back rest 150 of the hammock is raised upright into a chair form, the seat extension 308 becomes unnecessary. In this case, if the sliders 301 are pushed in by means of the heads 302, the seat extension 308 is brought into its hanging state, thus allowing the baby to lower its legs or place its feet on the foot rest.

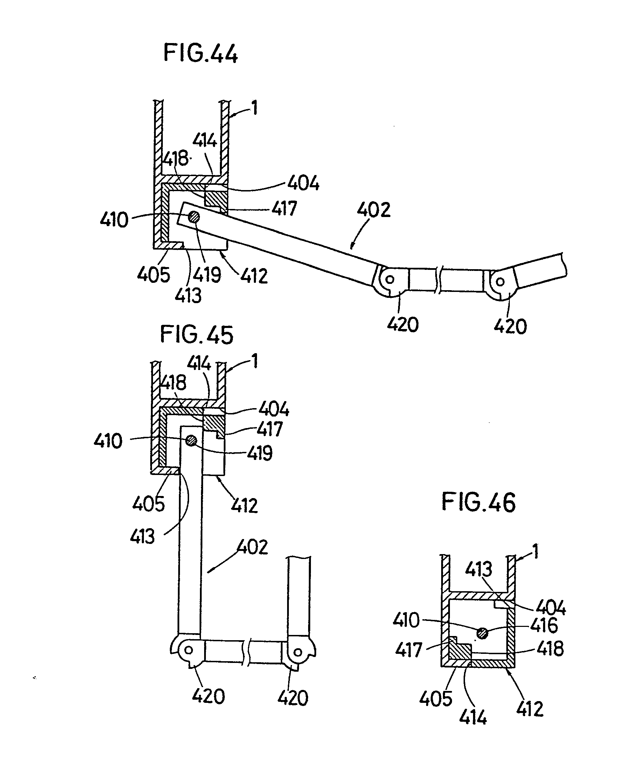

The torso guard 401 will now be described. Fig. 42 is a perspective view of an arm 1, for explanation of the torso guard 401. Fig. 43 is a perspective view of an insert 412 adapted to fit in a recess 404 in the arm shown in Fig. 42. Figs. 44 and 45 are plan views, partly in section, illustrating the operation of an arbor 402 included in the torso guard 401. Fig. 46 is a sectional view showing the manner in which the insert 412 is fitted in the recess 404 when the torso guard 401 is removed.

Referring to Figs. 38 through 40 and Figs. 42 through 46, the torso guard 401 comprises an arbor 402 and a cushion member 403 placed on the arbor 402 to cover the latter. The cushion member 403 is made of a material which is elastic and foldable, such as urethane foam. The arbor 402 is connected between the front ends of the arms 1.

Referring to Fig. 42, a recess 404 is formed in the front end of each arm 1. The recess 404 has a portion of its opening closed by a wall 405 having a predetermined size. The upper surface of the front end of the arm 1 is formed with a recess 406 which is, for example, rectangular. In the bottom of the recess 406 there is a circular through hole 407. A circular through hole 408 is formed in the lower wall of the recess 404 coaxially with said circular through hole 407. The stem 410 of a flanged pin 409 is insertable into the circular through holes 407 and 408. The flange 411 of the flanged pin 409 then fits intimately in the recess 406. Therefore, the flanged pin 409 will not easily be dislodged, and if it is desired to withdraw it, the lower end of the stem 410 may be struck with a hammer or the like. In addition, the direction of the common axis of the through holes 407 and 408, that is, the direction in which the stem portion 410 extends, is not perpendicular to the horizontal upper surface of the arm 1 but is slightly inclined with respect to the same.

Referring to Fig. 43, an insert 412 has a shape adapted to suit said recess 404. More particularly, the insert is formed externally with a notch 413 for receiving said wall 405. A second notch 414 is formed at a position diametrically opposite to the notch 413. The function of this second notch 414 will be described later. The insert 412 has an opening extending substantially over two out of four sides and its interior is substantially hollow. The upper and lower walls of the insert 412 are provided with circular through holes 415 and 416 arranged on a central axis thereof. One edge of the opening extending substantially over two sides of the insert 412 is defined by a wall 417, from which a wall 418 projects into the interior of the insert 412.

The insert 412 may be fitted in the recess 404 shown in Fig. 42, with the wall 405 received in the first notch 413 so that the insert 412 does not project beyond the recess 404. The four circular through holes 407, 415, 416 and 408 are then aligned with each other on a single axis.

In Figs. 44 and 45, the insert 412 is shown thus fitted in the recess 404 and with the associated end of the arbor 402 mounted in the insert 412. The end of the arbor 402 is formed with a circular through hole 419 and, with said through hole 419 aligned with said through holes 407, 415, 416 and 408, the stem 410 of the flanged pin 409 may be inserted therein to pivotally support the arbor 402 thereon.

The arbor 402 has foldable portions 420 at two places. The structure of the foldable portions is such as to allow only folding from the Fig. 44 state to the Fig. 45 state. Further, the arbor is constructed to extend along a slightly forwardly curved line when the foldable portions 420 are extended to the maximum degree.

When the baby carriage is folded, the pair of arms 1 approach each other and the arbor 402 is folded at the foldable portions 420 until the lateral surface of the arbor 402 adjacent each end thereof abuts against the wall 405 and the projecting wall 418. In this folded state, the cushion member 403 is likewise bent to conform to the shape of the arbor 402 being made of a bendable material. The torso guard 401 in its folded state, as shown in Fig. 39, extends inwardly from the arms 1 and is advantageously stored within the confines of the folded baby carriage. This is because, as already described, the direction in which the stem 410 of each flanged pin 409 extends is not perpendicular to the upper surface of the arm 1 but is slightly inclined with respect to the same.

When this baby carriage is opened, the pair of arms 1 move away from each other and the arbor 402 assumes its most extended state, as shown in Fig. 44. The lateral surface of the arbor 402 adjacent the end thereof then abuts against the wall 417 to define this state.

The torso guard 401 is also arranged so that it can be removed when it becomes unnecessary. This may be achieved simply by extracting the flanged pins 409 and separating the arbor 402 of the torso guard 401 from the arms 1. Such simple removal of the arbor 402, however, would leave open the recess 404, which is undesirable from the standpoint of external appearance and also of safety as it may be liable to cause nipping of the baby's fingers. For this reason, as shown in Fig. 46, the insert 412, once extracted from the recess 404, may be turned through 180° around the common axis of the circular through holes 415 and 416 and fitted again in the recess 404. In this state, the closed sides of the insert 412 cover the opening in the recess 404 and the wall 405 is received in the second notch 414 to establishing a snug fit. The stem 410 of the flanged pin 409 is then inserted so as to fix the parts in this stage.

**Claims**

1. A foldable baby carriage comprising:
a pair of front legs (3) each having a wheel (71);
a pair of rear legs (4) each having a wheel (72);
connecting members (8, 10) for maintaining said front legs (3) in spaced relation and said rear legs (4) in spaced relation;
a pair of push rod supports (14) each of which has a lower portion pivotably connected to a respective one of said rear legs (4) and is pivotable rearwardly of the associated leg (4);
a pair of generally upwardly extending push rods (6) pivotably connected to upper portions of said push rod supports (14) and operable to fold said upper portions downwardly about the pivots (16) between said push rod supports (14) and said rear legs (4), and
characterised by;
linkage means (1, 18, 21, 23, 24, 25, 26, 30) responsive to said folding of said upper portions downwardly about said pivots (16) to bring said front legs (3) towards one another, said rear legs (4) towards one another and said connecting members (8, 10) towards one another and to fold said front legs (3) and said push rods (6) towards said rear legs (4).

2. A baby carriage as claimed in claim 1, wherein said linkage means includes a pair of arms (1) which have front portions pivotably connected to said pair of front legs (3) and said pair of rear legs (4) and rear portions pivotably connected to said push rods (6) at points (5) spaced a predetermined distance from the lower ends of said push rods (6).

3. A baby carriage as claimed in claim 1, wherein said connecting members comprise a front leg connecting rod (8) between the front legs (3) and a rear leg connecting rod (10) between the rear legs (4).

4. A baby carriage as claimed in claim 2, wherein said linkage means comprises:
a pair of connecting rod turning members (23) each slidably fitted on an associated front leg (3) in a central region thereof;
a pair of bar links (25) connected between said pair of connecting rod turning members (23) and said front portions of said pair of arms (1), and
a pair of bars (26) extending inwardly from said pair of front legs (3) and pivotably installed, and wherein said connecting members include a front leg connecting rod (8) adapted to be downwardly foldable at the middle and pivotally supported at its opposite ends by said connecting rod turning members (23) and also pivotally supported by said bars (26) at pivot points (27) spaced a predetermined distance from each end of said front leg connecting rod (8).

5. A baby carriage as claimed in claim 2 or 4, wherein said linkage means includes a pair of fold-inducing connecting rods (18) pivotally supported at their opposite ends by said front legs (3) and said pusher rod supports (14).

6. A baby carriage as claimed in claim 5, wherein said connecting members include a rear leg connecting rod (10) adapted to be downwardly foldable at the middle and pivotally supported at its opposite ends by the lower portions of said pair of rear legs (4).

7. A baby carriage as claimed in claim 6, wherein said linkage means includes:
a central connecting rod (21) adapted to be forwardly foldable at the middle and pivotally supported at its opposite ends by the central portions of said pair of fold-inducing connecting rods (18), and

a pair of tie rods (30) arranged in a V shape between the foldable portion of said rear leg connecting rod (10) and pivot points (31, 32, 33) spaced a predetermined distance from the foldable portion of said central connecting rod (21) on each side thereof.

8. A baby carriage as claimed in any preceding claim, further including sleeves (44) axially slidably fitted on lower end portions of said pair of push rods (6), and means urging said sleeves (44) into engagement with said upper portions of said push rod supports (14) to thereby fix the angular relationship between said push rod supports (14) and said push rods (6).

9. A baby carriage as claimed in claim 8, further including operating means (41, 48 or 78, 81) for disengaging said sleeves (44) from said upper portions of said push rod supports (14).

10. A baby carriage as claimed in any preceding claim, further including a foldable handle (12) having handle attachment portions which are pivotally connected to said pair of push rods (6) and which are aligned with the axes of said push rods (6).

11. A baby carriage as claimed in claim 10, further including means (40, 43 or 75, 80) for inhibiting pivoting of said attachment portions with respect to said push rods (6).

12. A baby carriage as claimed in any preceding claim, further including a hammock comprising a back rest (150) and a seat (151), and a reclining mechanism (106, 101, 102, etc.) for supporting said back rest (150) in such a manner as to permit adjusting the reclining angle.

13. A baby carriage as claimed in claim 12, wherein said reclining mechanism includes back rest retaining rods (106) which retain said back rest (150) and which have lower ends pivotally supported at lower regions of said push rods (6), and connecting means (101, 102, etc.) connected between said back rest retaining rods (106) and said push rods (6) at positions spaced predetermined distances from their lower ends for determining the angle of inclination of said back rest retaining rods (106).

14. A baby carriage as claimed in claim 13, wherein said connecting means include first and second connecting rods (101, 102) pivotally connected together, and a locking member (115) pivotally supported by said first connecting rod (101) for fixing the angle formed between said first and second connecting rods (101, 102), said second connecting member (102) being provided at different locations with first and second engagement means (113, 114) selectively engageable by said locking member (115) to retain said first and second connecting rods (101, 102) in first and second folded conditions respectively.

15. A baby carriage as claimed in claim 14, further including a cover (118) for covering the connected portions of said first and second connecting rods (101, 102) and said locking member (115), said cover (118) being attached to said locking member (115) so as to turn integrally with the latter.

16. A baby carriage as claimed in claim 14 or claim 15, further including a head guard formed on the upper end of said back rest (150), and a head guard retaining rod (130) pivotally supported by upper portions of said back rest retaining rods (106) and fixedly secured to said first connecting rod (101), whereby, in said first folded condition, said back rest retaining rod (106) is in a raised position with said head guard being substantially aligned with said back rest retaining rod (106), and, in said second folded condition, said back rest retaining rod (106) is in a lowered position with said head guard retaining rod (130) extending in a direction which crosses said back rest retaining rod (106).

17. A baby carriage as claimed in any preceding claim, further including a basket (206) which comprises a pair of L-shaped lateral rods (202) pivotally supported at pivot points (201) spaced a predetermined distance from the lower ends of said rear legs (4) and extending rearwardly and then upwardly, a pair of upper side rods (204) pivotally supported at their ends by the upper ends of said L-shaped lateral rods (202) and the central portions of said pusher rod bodies (6), and a pliable material which is retained by said L-shaped lateral rods (202) and said upper side rods (204) and whose opposite lateral surfaces are defined by said L-shaped lateral rods (202) and said upper side rods (204).

## Revendications

1. Voiture d'enfant pliable comprenant:

deux pieds avant (3) comportant chacun une roue (71);

deux pieds arrière (4) comportant chacun une roue (72);

des organes d'entretoisement (8, 10) destinés à maintenir les pieds avant (3) espacés l'un de l'autre et les pieds arrière (4) espacés l'un de l'autre;

deux supports de barres de poussée (14) comportant chacun une partie inférieure articulée à un des pieds arrière (4) et pouvant pivoter vers l'arrière du pied (4) associè;

deux barries de pouseé (6) qui s'étendent d'une manière générale vers le haut, qui sont articulées aux parties supérieures des supports de barres de poussée (14) et qui peuvent être actionnées pour plier les parties supérieures vers le bas autour des pivots (16) entre les supports de barres de poussée (14) et les pieds arrière (4), et

caractérisée par:

une liaison mécanique (1, 18, 21, 23, 24, 25, 26, 30) réagissant au pliage des parties supérieures vers le bas autour des pivots (16) pour rapprocher les pieds avant (3) l'un de l'autre, les pieds arrière (4) l'un de l'autre et les organes d'entretoisement (8, 10) l'un de l'autre et pour plier les pieds avant (3) et les barres de poussée (6) vers les pieds arrière (4).

2. Voiture d'enfant suivant la revendication 1, dans laquelle la liaison mécanique comprend deux bras (1) qui comportent des parties antérieures articulées aux deux pieds avant (3) et aux deux pieds arrière (4) et des parties postérieures articulées aux barres de poussée (6) en des points (5) espacés d'une distance prédéterminée des extrémités inférieures des barres de poussée (6).

3. Voiture d'enfant suivant la revendication 1, dans laquelle les organes d'entretoisement comprennent une entretoise (8) entre les pieds avant (3) et une entretoise (10) entre les pieds arrière (4).

4. Voiture d'enfant suivant la revendication 2, dans laquelle la liaison mécanique comprend:

deux chapes pour entretoise (23) montées chacune à coulissement sur un pied avant (3) associé dans une région médiane de celui-ci,

deux tringles de liaison (25) reliées entre les deux chapes pour entretoise (23) et les parties antérieures des deux bras (1), et

deux barres (26) qui s'étendent vers l'intérieur à partir des deux pieds avant (3) et qui sont montées à pivot,

et les organes d'entretoisement comprennent une entretoise (8) pour les pieds avant propre à être pliée vers le bas en son milieu et supportée à pivot à ses extrémités par les chapes pour entretoise (23) et supportée également à pivot par les barres (26) en des points de pivotement (27) espacés d'une distance prédéterminée de chaque extrémité de l'entretoise (8) reliant les pieds avant.

5. Voiture d'enfant suivant la revendication 2 ou 4, dans laquelle la liaison mécanique comprend deux entretoises de pliage (18) supportées à pivot à leurs extrémités opposées par les pieds avant (3) et les supports de barres de poussée (14).

6. Voiture d'enfant suivant la revendication 5, dans laquelle les organes d'entretoisement comprennent une entretoise (10) pour les pieds arrière propre à être pliée vers le bas en son milieu et supportée à pivot à ses extrémités opposées par les parties inférieures des deux pieds arrière (4).

7. Voiture d'enfant suivant la revendication 6, dans laquelle la liaison mécanique comprend:

une entretoise médiane (21) propre à être pliée vers l'avant en son milieu et supportée à pivot à ses extrémités opposées par les parties médianes des deux entretoises de pliage (18), et

deux tirants (30) disposés en V entre la partie pliable de l'entretoise (10) reliant les pieds arrière et les points de pivotement (31, 32, 33) espacés d'une distance prédéterminée de la partie pliable de l'entretoise médiane (21) de chaque côté de celle-ci.

8. Voiture d'enfant suivant l'une quelconque des revendications précédentes, qui comprend, en outre, des douilles (44) montées de manière à pouvoir coulisser axialement sur des parties d'extrémité inférieure des deux barres de poussée (6), et des moyens sollicitant les douilles (44) en contact avec les parties supérieures des supports de barres de poussée (14) pour fixer ainsi la relation angulaire entre les supports de barres de poussée (14), et les barres de poussée (6).

9. Voiture d'enfant suivant la revendication 8, qui comprend, en outre, des moyens d'actionnement (41, 48 ou 78, 81) destinés à dégager les douilles (44) des parties supérieures des supports de barres de poussée (14).

10. Voiture d'enfant suivant l'une quelconque des revendications précédentes, qui comprend, en outre, une poignée pliable (12) comportant des parties d'attache de poignée qui sont articulées aux deux barres de poussée (6) et qui sont alignées avec les axes des barres de poussée (6).

11. Voiture d'enfant suivant la revendication 10, qui comprend, en outre, des moyens (40, 43 ou 75, 80) pour empêcher les parties d'attache de pivoter par rapport aux barres de poussée (6).

12. Voiture d'enfant suivant l'une quelconque des revendications précédentes, qui comprend, en outre, un hamac comportant un dossier (150) et un siège (151) et un mécanisme d'inclinaison (106, 101, 102, etc.) pour supporter le dossier (150) d'une manière telle qu'il soit possible de régler l'angle d'inclinaison.

13. Voiture d'enfant suivant la revendication 12, dans laquelle le mécanisme d'inclinaison comprend des barres de retenue de dossier (106) qui retiennent le dossier (150) et qui comportent des extrémités inférieures supportées à pivot aux régions inférieures des barres de poussée (6), et des moyens de liaison (101, 102, etc.) reliés entre les barres de retenue de dossier (106) et les barres de poussée (6) en des endroits espacés de distances prédéterminées de leurs extrémités inférieures pour déterminer l'angle d'inclinaison des barres de retenue de dossier (106).

14. Voiture d'enfant suivant la revendication 13, dans laquelle les moyens de liaison comprennent une première et une seconde biellette (101, 102) articulées l'une à l'autre et un organe de verrouillage (115) monté à pivot sur la première biellette (101) pour fixer l'angle formé entre la première et la seconde biellette (101, 102), la seconde biellette (102) étant pourvue en des endroits différents d'un premier et d'un second moyen d'engagement (113, 114) pouvant être engagés sélectivement par l'organe de verrouillage (115) pour retenir la première et la seconde biellette (101, 102) respectivement dans un premier et un second état plié.

15. Voiture d'enfant suivant la revendication 14, qui comprend, en outre, un couvercle (118) pour couvrir les parties reliées des première et seconde biellettes (101, 102) et de l'organe de verrouillage (115), le couvercle (118) étant attaché à l'organe de verrouillage (115) de manière à tourner d'une pièce avec celui-ci.

16. Voiture d'enfant suivant la revendication 14 ou 15, qui comprend, en outre, une protection pour la tête formée sur l'extrémité supérieure du dossier (150) et une barre de retenue (130) de la protection pour la tête supportée à pivot par des parties supérieures des barres de retenue de dossier (106) et fixée à la première biellette (101) de sorte que, dans le premier état plié, la barre de retenue de dossier (106) se trouve dans un état relevé et la protection pour la tête est en substance en ligne avec la barre de retenue de dossier (106) et, dans le second état plié, la barre de retenue de dossier (106) est dans un état abaissé et la barre de retenue (130) de la protection pour la tête s'étend dans une direction qui croise la barre de retenue de dossier (106).

17. Voiture d'enfant suivant l'une quelconque des revendications précédentes, qui comprend, en outre, un panier (206) qui comprend deux tiges latérales (202) en L supportées à pivot en des points de pivotement (201) espacés d'une distance prédéterminée des extrémités inférieures des pieds arrière (4) et s'étendant vers l'arrière et puis vers le haut, deux tiges latérales supérieures (204) supportées à pivot à leurs extrémités par les extrémités supérieures des tiges latérales (202) en L et par les parties médianes des corps de barres de poussée (6), et une matière flexible qui est retenue par les tiges latérales (202) en L et par les tiges latérales supérieures (204) et dont les surfaces latérales opposées sont définies par les tiges latérales (202) en L et les tiges latérales supérieures (204).

**Patentansprüche**

1. Zusammenklappbarer Kinderwagen mit zwei Vorderbeinen (3), von denen jedes ein Rad (71) besitzt; zwei Hinterbeinen (4), von denen jedes ein Rad (72) besitzt; Verbindungsgliedern (8, 10), um die Vorderbeine (3) beabstandet zu halten und die Hinterbeine (4) beabstandet zu halten; zwei Schubstangenhalterungen (14), von denen jede einen unteren Teil besitzt, der mit einem der Hinterbeine (4) schwenkbar verbunden ist und hinter das zugeordnete Bein (4) geschwenkt werden kann; und zwei sich im allgemeinen nach oben erstreckende Schubstangen (6), die mit den oberen Teilen von Schubstangenhalterungen (14) schwenkbar verbunden sind und dazu dienen, um die Oberteile um die Schwenkzapfen (16) nach unten zwischen die Schubstangenhalterungen (14) und die Hinterbeine (4) zu klappen; gekennzeichnet durch eine Verbindungseinrichtung (1, 18, 21, 23, 24, 25, 26, 30), die dann, wenn die Oberteile um die Schwenkzapfen (16) heruntergeklappt werden, dazu dient, um die Vorderbeine (3) zueinander, die Hinterbeine (4) zueinander und die Verbindungsglieder (8, 10) zueinander zu bringen und die Vorgerbeine (3) und die Schubstangen (6) zu den Hinterbeinen (4) zu klappen.

2. Kinderwagen gemäß Anspruch 1, dadurch gekennzeichnet, daß die Verbindungseinrichtung zwei Arme (1) aufweist, die vordere Teile besitzen, die mit den beiden Vorderbeinen (3) und den beiden Hinterbeinen (4) schwenkbar verbunden sind, sowie hintere Teile besitzen, die mit den Schubstangen (6) an Stellen (5) schwenkbar verbunden sind, die um einen vorgegebenen Abstand von den unteren Enden der Schubstangen (6) beabstandet sind.

3. Kinderwagen gemäß Anspruch 1, dadurch gekennzeichnet, daß die Verbindungsglieder eine Vorderbein-Verbindungsstange (8) zwischen den Vorderbeinen (3) sowie eine Hinterbein-Verbindungsstange (10) zwischen den Hinterbeinen (4) besitzen.

4. Kinderwagen gemäß Anspruch 2, dadurch gekennzeichnet, daß die Verbindungseinrichtung zwei Verbindungsstangen-Klappteile (23), von denen jedes auf einem zugehörenden Vorderbein (3) in dessen Mittelteil befestigt ist; zwei Verbindungsstangen (25), die zwischen den beiden Verbindungsstangen-Klappteilen (23) und den vorderen Teilen der beiden Arme (1) befestigt sind; sowie zwei Stangen (26) enthält, die sich von den beiden Vorderbeinen (3) nach innen erstrecken und schwenkbar angeordnet sind, wobei die Verbindungsglieder eine Vorderbein-Verbindungsstange (8) aufweisen, die so befestigt ist, daß sie in der Mitte nach unten geklappt werden kann und an ihren engegengesetzten Enden in den Verbindungsstangen-Klappteilen (23) schwenkbar gelagert ist und weiters auf den Stangen (26) in Drehzapfen (27) schwenkbar gelagert ist, die um einen vorgegebenen Abstand von jedem Ende der Vorderbein-Verbindungsstange (8) beabstandet sind.

5. Kinderwagen gemäß Anspruch 2 oder 4, dadurch gekennzeichnet, daß die Verbindungseinrichtung zwei Klappauslöse-Verbindungsstangen (18) aufweist, die an ihren entgegengesetzten Enden in den Vorderbeinen (3) und den Schubstangenhalterungen (14) schwenkbar gelagert sind.

6. Kinderwagen gemäß Anspruch 5, dadurch gekennzeichnet, daß die Verbindungsglieder eine Hinterbein-Verbindungsstange (10) aufweisen, die so angeordnet ist, daß sie in der Mitte nach unten geklappt werden kann und an ihren entgegengesetzten Enden in den Unterteilen der beiden Hinterbeine (4) schwenkbar gelagert ist.

7. Kinderwagen gemäß Anspruch 6, dadurch gekennzeichnet, daß die Verbindungseinrichtung eine Mittel-Verbindungsstange (21), die so angeordnet ist, daß sie in der Mitte nach vorne geklappt werden kann und an ihren entgegengesetzten Enden in den Mittelteilen der beiden Klappauslöse-Verbindungsstangen (18) schwenkbar gelagert ist, sowie zwei Kuppelstangen (30) aufweist, die V-förmig zwischen dem Klappbaren Teil der Hinterbein-Verbindungsstange (10) und den Schwenkzapfen (31, 32, 33) um einen vorgegebenen Abstand von klappbaren Teil der Mittel-Verbindungsstange (21) zu beiden Seiten beabstandet ist.

8. Kinderwagen gemäß jedem der bisherigen Ansprüche, dadurch gekennzeichnet, daß er weiters Muffen (44) aufweist, die auf den unteren Endteilen der beiden Schubstangen (6) axial verschiebbar befestigt sind, sowie eine Vorrichtung aufweist, um die Muffen (44) mit den Oberteilen der Schubstangenhalterungen (14) in Eingriff zu drücken, um dadurch das Winkelverhältnis zwischen den Schubstangenhalterungen (14) und den Schubstangen (6) festzuhalten.

9. Kinderwagen gemäß Anspruch 8, dadurch gekennzeichnet, daß er weiters eine Betätigungseinrichtung (41, 48 oder 78, 81) aufweist, um die Muffen (44) aus den Oberteilen der Schubstangenhalterungen (14) auszurasten.

10. Kinderwagen gemäß jedem der‘ bisherigen Ansprüche, dadurch gekennzeichnet, daß er weiters einen Klappgriff (12) aufweist, der Handgriffbefestigungsteile besitzt, die mit den beiden Schubstangen (6) schwenkbar verbunden und mit den Achsen der Schubstangen (6) ausgerichtet sind.

11. Kinderwagen gemäß Anspruch 10, dadurch gekennzeichnet, daß er weiters eine Einrichtung (40, 43 oder 75, 80) aufweist, um ein Verschwenken der Befestigungsteile zu den Schubstangen (6) zu verhindern.

12. Kinderwagen gemäß jedem der bisherigen Ansprüche, dadurch gekennzeichnet, daß er weiters eine Hängematte aufweist, die eine Rückenlehne (150) und einen Sitz (151) enthält, sowie eine Liegesitz-Einrichtung (106, 101, 102, usw.) aufweist, um die Rückenlehne (150) so zu halten, daß der Winkel des Leigesitzes eingestellt werden kann.

13. Kinderwagen gemäß Anspruch 12, dadurch gekennzeichnet, daß die Liegesitz-Einrichtung Rückenlehnen-Haltestangen (106) aufweist, die die Rückenlehne (150) Halten und untere Enden besitzen, die in Unterteilen der Schubstangen (6) schwenkbar gelagert sind, sowie Verbindungseinrichtungen (101, 102 usw.) aufweisen, die zwischen den Rücklehnen-Haltestangen (106) und den Schubstangen (6) an Stellen befestigt sind, die um vorgegebene Abstände von den unteren Enden beabstandet sind, um den Neigungswinkel der Rücklehnen-Haltestangen (106) festzulegen.

14. Kinderwagen gemäß Anspruch 13, dadurch gekennzeichnet, daß die Verbindungseinrichtung zwei Verbindungsstangen (101, 102) aufweist, die schwenkbar miteinander verbunden sind, sowie eine Verriegelungseinrichtung (115) aufweist, die in der ersten Verbindungsstange (101) schwenkbar gelagert ist, um den Winkel zwischen den beiden Verbindungsstangen (101, 102) festzulegen, wobei das zweite Verbindungsglied (102) an unterschiedlichen Stellen der ersten und zweiten Einrasteinrichtung (113, 114) vorgesehen ist, die wahlweise in die Verriegelungseinrichtung (115) eingreifen kann, um die beiden Verbindungsstangen (101, 102) im ersten bzw. zweiten Klappzustand zu halten.

15. Kinderwagen gemäß Anspruch 14, dadurch gekennzeichnet, daß er weiters einen Deckel (118) aufweist, um die verbundenen Teile der beiden Verbindungsstangen (101, 102) und der Verriegelungseinrichtung (115) zu bedecken, wobei der Deckel (118) an der Verriegelungseinrichtung (115) befestigt ist, um sich gemeinsam mit dieser zu drehen.

16. Kinderwagen gemäß Anspruch 14 oder 15, dadurch gekennzeichnet, daß er weiters einen Kopfschutz besitzt, der am oberen Ende der Rückenlehne (150) ausgebildet ist, und eine Kopfschutz-Haltestange (130) besitzt, die in den oberen Teilen, der Rückenlehnen-Haltestangen (106) schwenkbar gelagert und an der ersten Verbindungsstange (101) sicher befestigt ist, wodurch im ersten Klappzustand die Rückenlehnen-Haltestange (106) sich in einer angehobenen Stellung befindet, wobei der Kopfschutz im wesentlichen mit der Rückenlehnen-Haltestange (106) ausgerichtet ist, und im zweiten Klappzustand die Rückenlehnen-Haltestange (106) sich in einer abgesenkten Stellung befindet, wobei die Kopfschutz-Haltestange (130) sich in eine Richtung erstreckt, in der sie die Rückenlehnen-Haltestange (106) kreuzt.

17. Kinderwagen gemäß jedem der bisherigen Ansprüche, dadurch gekennzeichnet, daß er weiters einen Korb (206) aufweist, der zwei L-förmige Seitenstangen (202), die in Schwenkzapfen (201) schwenkbar gelagert sind, die um einen vorgegebenen Abstand von den Ünterenden der Hinterbeine (4) beabstandet sind, und sich nach hinten und dann nach oben erstrecken, zwei obere Seitenstangen (204), die an ihren Enden in den oberen Enden der L-förmigen Seitenstangen (202) sowie in den Mittelteilen der Schubstangenteile (6) schwenkbar gelagert sind, sowie ein nachgiebiges Material enthält, das von den L-förmigen Seitenstangen (202) sowie den oberen Seitenstangen (204) gehalten wird und dessen gegenüberliegende Seitenflächen von den L-förmigen Seitenstangen (202) sowie den oberen Seitenstangen (204) festgelegt werden.

# FIG.1

## FIG. 2

FIG. 4

FIG. 3

FIG. 5

FIG. 6

FIG.7

FIG.9

FIG.8

FIG.11

FIG.10

# FIG.12

# FIG.13

# FIG.14

# FIG.15

# FIG.16

# FIG.17

# FIG.18

# FIG.19

# FIG.20

**FIG.21**

**FIG.22**

**FIG.23**

**FIG.24**

**FIG.25**

**FIG.26**

**FIG.28**

**FIG.27**

**FIG.29**

6

# FIG.30

# FIG.32

# FIG.31

# FIG.33

# FIG.34

# FIG.36

# FIG.35

# FIG.37

## FIG. 38

FIG. 39

FIG. 42

FIG. 43

FIG. 40

FIG. 41

## FIG.44

## FIG.45

## FIG.46